# EUROPEAN PATENT SPECIFICATION

(11) **EP 2 357 079 B1**
(45) Date of publication and mention of the grant of the patent: **16.07.2014**
(21) Application number: 09827752.8
(22) Date of filing: 19.11.2009
(51) Int. Cl.: B32B 27/18, B32B 27/08, C08K 3/34, C08K 5/00, C08J 7/12

(54) **MULTILAYER FILM AND A PRODUCTION METHOD FOR SAME**
MEHRSCHICHTIGER FILM UND VERFAHREN ZU SEINER HERSTELLUNG
FILM MULTICOUCHE ET SON PROCÉDÉ DE PRODUCTION

(30) Priority: 19.11.2008 KR 20080115391
(43) Date of publication of application: 17.08.2011
(73) Proprietor: LG Chem, Ltd., Youngdungpo-gu Seoul 150-721 (KR)
(72) Inventor: MA, Seung-Lac, Chungju-si Chungcheongbuk-do 380-100 (KR); KIM, Dong-Ryul, Daejeon Metropolitan City 305-721 (KR); KIM, Gi-Cheul, Daejeon Metropolitan City 305-340 (KR); RYU, Sang-Uk, Daejeon Metropolitan City 305-761 (KR); LEE, Ho-Jun, Daejeon 305-380 (KR); HWANG, Jang-Yeon, Seoul 158-070 (KR)
(74) Representative: Goddar, Heinz J.
(86) International application number: PCT/KR2009/006841
(87) International publication number: WO 2010/058987

(56) References cited:
- GB-A- 1 596 107
- US-A1- 2002 048 678
- US-A1- 2005 175 831
- US-B1- 6 245 428
- US-B1- 6 632 535
- DATABASE WPI Week 200462 Thomson Scientific, London, GB; AN 2004-637356 XP002674563, & JP 2004 238500 A (RENGO CO LTD) 26 August 2004 (2004-08-26)
- DATABASE WPI Week 200106 Thomson Scientific, London, GB; AN 2001-043577 XP002674564, & JP 2000 290350 A (ARAKAWA CHEM IND LTD) 17 October 2000 (2000-10-17)

## Description

### BACKGROUND OF THE INVENTION

The present invention relates to a multi-layer film and a method for producing the same, and more particularly, to a multi-layer film having improved heat resistance and high-temperature flatness and a method for producing the same. This application claims priority under 35 U.S.C. §119 to Korean Patent Application No. 10-2008-0115391, filed on November 19, 2008, with the Korean Intellectual Property Office, the disclosure of which is incorporated herein by reference in its entirety.

In general, glass plates used in various types of electronic devices, including organic or inorganic light emitting devices, display devices and photovoltaic devices, have satisfactory properties in terms of light transmission, heat expansion coefficient and chemical resistance. However, such glass plates are brittle and rigid, and thus require special care when handling them. As a result, limitations are imposed on the design of products using such glass plates.

Due to the above-mentioned problem, many attempts have been made to substitute the use of such glass plates in electronic devices with plastics, which are typically characterized by low weight, excellent impact resistance and high flexibility. However, current commercially available plastic films have several disadvantages when compared to glass plates, and thus there is a need to improve on the physical properties of plastic films. In particular, known plastic films undergo curling, blocking and sagging when processed at temperatures higher than their glass transition temperatures (Tg), and are thus difficult to subject to roll processing.

US 2005/175831 A1 discloses a multilayer film comprising a polymer substrate, two first organic/inorganic hybrid buffer layers on the top and bottom surface of the polymeric substrate, gas barrier layers and second organic/inorganic hybrid buffer layers.

GB 1596107 A discloses the preparation of a coating composition comprising an epoxy alkoxy silane hydrozylate.

JP 2000 290350 A describes a gas barrier composition comprising a hydrolyzed substance of metal alkoxide and/or its condensate, and a crosslinking agent such as an epoxy compound.

JP 2004 238500 A discloses an organic/inorganic hybrid composition, comprising an amine modified epoxy resin and a hydrolyzable alkoxy silane, useful as a gas barrier coating for plastic substrates.

### SUMMARY OF THE INVENTION

An embodiment of the present invention is directed to providing a multi-layer film having improved heat resistance and high-temperature flatness, thereby facilitating processing carried out at temperatures lower than its glass transition temperature (Tg), and is amenable to processing at temperatures higher than its glass transition temperature (Tg) while inhibiting or completely preventing curling, blocking and sagging phenomena.

Another embodiment of the present invention is directed to providing a method for producing the above-mentioned multi-layer film.

In accordance with an embodiment of the present invention, there is provided a multi-layer film including a polymer substrate and buffer layers formed on the top surface and the bottom surface of the polymer substrate by using a UV-cured and thermally cured product of a UV-curable and thermally curable buffer composition according to claim 1. The polymer substrate may have a monolayer structure or a laminated structure including two or more polymer layers.

In accordance with another embodiment of the present invention, there is provided a method for producing a multi-layer film, including: (a) coating one surface of a polymer substrate with a UV-curable and thermally curable buffer coating composition to form a buffer layer; (b) carrying out UV curing of the buffer layer formed in step (a); (c) coating the other surface of the polymer surface having the buffer layer on one surface thereof with a UV-curable and thermally curable buffer composition to form a buffer layer; (d) carrying out UV curing of the buffer layer formed in step (c); and (e) carrying out thermal curing of the UV-cured buffer layers provided on both surfaces of the polymer surface according to claim 13.

In accordance with another embodiment of the present invention, there is provided a method for producing a multi-layer film, including: (a) coating one surface of a polymer substrate with a UV-curable and thermally curable buffer coating composition to form a buffer layer; (b) carrying out UV curing of the buffer layer; (c) carrying out thermal curing of the UV-cured buffer layer to form a multi-layer film having a structure including the buffer layer laminated with the polymer substrate; (d) repeating steps (a)-(c) to provide another multi-layer film having the same structure as mentioned in step (c); and (e) laminating the multi-layer films obtained in steps (c) and (d) with each other, in such a manner that their polymer substrate surfaces are in contact with each other, to form a multi-layer film having a symmetrical structure according to claim 14.

In accordance with another embodiment of the present invention, there is provided an electronic device including the above-mentioned multi-layer film.

In accordance with another embodiment of the present invention, there is provided a buffer composition used to form the buffer layer, the buffer composition including a sol-like composition of hydrolyzate of at least one of an organosilane and a metal alkoxide, and a curable epoxy resin according to claim 17. In particular, the sol-like composition of hydrolyzate of at least one of an organosilane and a metal alkoxide may be present in an amount of 5-95 parts by weight, and the curable epoxy resin may be present in an amount of 5-95 parts by weight.

Preferred embodiments are disclosed in the subclaims.

### BRIEF DESCRIPTION OF THE DRAWINGS

FIG. 1 is a sectional view of a multi-layer film according to an embodiment of the present invention;
FIG. 2 is a sectional view of a multi-layer film according to another embodiment of the present invention;
FIG. 3 is a graph showing the linear expansion coefficients of the multi-layer films obtained according to Examples 1 and 4 as a function of temperature, in comparison with the multi-layer film obtained according to Comparative Example 3;
FIG. 4 is a photographic view illustrating the multi-layer film having high flatness according to Example 1;
FIG. 5 is a photographic view illustrating the multi-layer film in which curling occurs according to Comparative Example 1; and
FIG. 6 is a photographic view illustrating the multi-layer film having poor flatness according to Comparative Example 3.

### DESCRIPTION OF SPECIFIC EMBODIMENTS

Exemplary embodiments of the present invention will be described below in more detail with reference to the accompanying drawings. The present invention may, however, be embodied in different forms and should not be construed to be limited to the embodiments set forth herein. Rather, these embodiments are provided so that this disclosure will be thorough and complete, and will fully convey the scope of the present invention to those skilled in the art. Throughout the disclosure, like reference numerals refer to like parts throughout the various figures and embodiments of the present invention.

In one aspect, there is provided a multi-layer film including a polymer substrate and buffer layers formed on the top surface and the bottom surface of the polymer substrate using a UV-cured and thermally cured product of a UV-curable and thermally curable buffer composition.

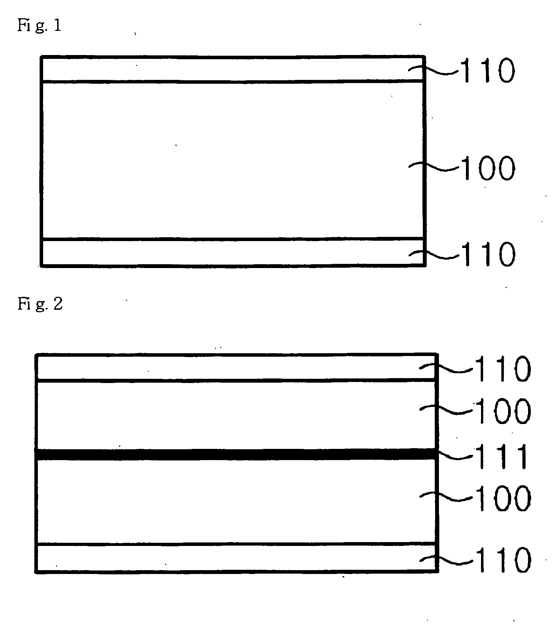

According to an embodiment of the present invention, as shown in FIG. 1, the multi-layer film may have a structure comprising a buffer layer 110, a polymer substrate 100 and another buffer layer 110, stacked successively.

The polymer substrate may have a monolayer structure or a laminated structure comprising two or more layers. FIG. 2 illustrates a structure wherein the polymer substrate includes a polymer substrate 100, a bonding layer 111 and another polymer substrate 100. However, the scope of the present invention is not limited thereto.

The polymer substrate is preferably in the form of a film or sheet having a thickness of 10-2,000 µm.

As mentioned above, the multi-layer film includes a buffer layer subjected to both UV curing treatment and thermal curing treatment. Therefore, it is possible to solve the problems of delamination and curling caused by differential stress between one layer and another layer. As a result, no curling occurs at high temperatures, even in the absence of a known laminated structure. In this context, the polymer substrate may have a monolayer structure. In a variant, the polymer substrate may have a laminated structure comprising two or more polymer layers. When using such a laminated polymer substrate, the resultant multi-layer film has a longitudinally symmetrical structure. As a result, it is possible to minimize curling in the film.

When the polymer substrate has a laminated structure comprising two or more polymer layers, such a laminate may be obtained using a commercially available acrylic adhesive or a thermal bonding process. When using an adhesive, there is no particular limitation in the amount thereof. However, the bonding layer containing an adhesive preferably has a thickness of 0.1-10 µm.

The polymer substrate may be obtained via a solution casting process or film extrusion process. To minimize temperature-dependent deformation after producing the polymer substrate, it is preferred that annealing be carried out at a temperature near the glass transition temperature for a short time of several seconds to minutes. After the annealing, the polymer substrate may be surface treated to improve coatability and adhesiveness. More particularly, such surface treatment may be carried out by primer coating, plasma treatment using corona, oxygen or carbon dioxide, UV-ozone treatment, ion beam treatment using reactive gas, or the like.

The polymer substrate may be at least one selected from substrates formed of a single polymer, substrates formed of a polymer blend including two or more polymers, and substrates formed of a polymer composite to which organic or inorganic additives have been added.

In a preferred embodiment, the multi-layer film may be used as a substrate for a liquid crystal display device. In this case, formation of a thin film transistor and a transparent electrode is carried out at a high temperature of 200°C or higher. Therefore, it is required to use highly heat-resistant polymers capable of standing such high temperatures. Particular examples of such polymers may include polynorbornene, aromatic fullerene polyester, polyethersulfone, bisphenol A polysulfone, polyimide, etc. More recently, many studies have been conducted to reduce the temperature at which a substrate is processed to a low temperature, so that the processing of a substrate may be performed at low temperatures around 150°C. Therefore, it is possible to use other polymers, such as polyethylene terephthalate, polyethylene naphthalene, polyarylate, polycarbonate, cyclic olefin copolymers, etc.

Particularly, when using a PET film as a substrate, it is possible to inhibit or completely prevent curling, blocking or sagging in the PET film at temperatures higher than the glass transition temperature (Tg). More particularly, when using a PET film, it may be processed at high temperatures of 100°C or higher to provide a multi-layer film having high surface hardness.

In addition, a polymer composite including a nanosubstance comprising an organic or inorganic additive may also be used as the polymer substrate.

The polymer composite may include a polymer-clay nanocomposite including a clay nanosubstance dispersed in a polymer matrix. The polymer-clay nanocomposite may improve the physical properties of a polymer, such as mechanical properties, heat resistance, a gas barrier property and dimensional stability, even with a small amount of clay compared to other known composites including glass fibers, since it includes clay having a small particle size (< 1 µm) and high aspect ratio. In other words, it is required to exfoliate layers of laminar clay in order to improve the above-mentioned physical properties, and the above-described polymer-clay nanocomposite satisfies this requirement.

Particular examples of the polymer that may be used in the polymer-clay nanocomposite include polystyrene, polymethacrylate, polyethylene terephthalate, polyethylene naphthalene, polyarylate, polycarbonate, cyclic olefin copolymers, polynorbornene, aromatic fullerene polyester, polyether sulfone, polyimide, epoxy resin, multifunctional acrylate, and the like. Particular examples of clay include laponite, montmorillonite, megadite, and the like.

The buffer layer serves to mitigate the large difference in linear expansion coefficient from the polymer substrate and to improve adhesion to the polymer substrate. In addition, the buffer layer may serve to planarize the surface of the polymer substrate.

More particularly, the buffer layer includes a UV-cured and thermally cured product. After curing, the buffer layer has a content of epoxy groups ranging from 10 wt% to less than 100 wt%, and preferably ranging from 30 wt% to 95 wt%, and more preferably ranging from 50 wt% to 90 wt%.

For example, the buffer layer may include a UV-cured and thermally cured product of a mixture containing hydrolyzate of at least one of an organosilane and a metal alkoxide, and a curable epoxy resin. Preferably, based on 100 parts by weight of the cured product, hydrolyzate of at least one of an organosilane and a metal alkoxide is present in an amount of 5-95 parts by weight, and the curable epoxy resin is present in an amount of 5-95 parts by weight.

The buffer layer may be formed by coating the polymer substrate with a UV-curable and thermally curable buffer composition, followed by UV curing and thermal curing treatment. Particularly, at least one of an organosilane and a metal alkoxide is partially hydrolyzed to obtain a sol-like composition, which, in turn, is mixed with a curable epoxy resin. Then, the polymer substrate is coated with the resultant mixture, followed by UV curing and thermal curing treatment.

Any organosilanes may be used without any particular limitation, as long as they contain organosilane groups. Particularly, at least one organosilane selected from the group consisting of compounds represented by the following Chemical Formulae 1 to 3 may be used. Any metal alkoxides may be used without any particular limitation. Particularly, at least one metal alkoxide selected from the group consisting of compounds represented by the following Chemical Formula 4 may be used. Any curable epoxy resins may be used without any particular limitation as long as they contain epoxy groups. Particularly, at least one epoxy resin selected from the group consisting of alicyclic epoxy resins represented by the following Chemical Formulae 5 to 10 and triglycidyl isocyanurates represented by the following Chemical Formula 11 may be used.

[Chemical Formula 1] (R¹)ₘ-Si-X₍₄₋ₘ₎

[Chemical Formula 2] (R¹)ₘ-O-Si-X(₄₋ₘ)

[Chemical Formula 3] (R¹)ₘ-N(R²)-Si-X₍₄₋ₘ₎

wherein X(s) may be the same or different, and each represents H, halogen, a C1-C12 alkoxy, acyloxy, alkylcarbonyl, alkoxycarbonyl or -N(R²)₂;
R¹(s) may be the same or different, and each represents a C1-C12 alkyl, C2-C12 alkenyl, alkynyl, C6-C20 aryl, arylalkyl, alkylaryl, arylalkenyl, alkenylaryl, arylalkynyl, alkynylaryl, halogen, amide, aldehyde, ketone, alkylcarbonyl, carboxy, mercapto, cyano, hydroxyl, C1-C12 alkoxy, C1-C12 alkoxycarbonyl, sulfonic acid, phosphoric acid, acryloxy, methacryloxy, epoxy or vinyl group;
R² is H or C1-C12 alkyl; and
m is an integer of 1-3.

[Chemical Formula 4] M-(R³)_{z}

wherein M is a metal element selected from aluminum, zirconium and titanium;
R³(s) may be the same or different, and each represents halogen, C1-C12 alkyl, alkoxy, acyloxy or hydroxyl group; and
Z is an integer of 3 or 4. 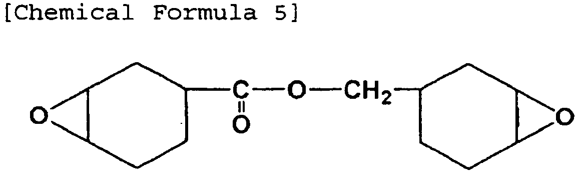 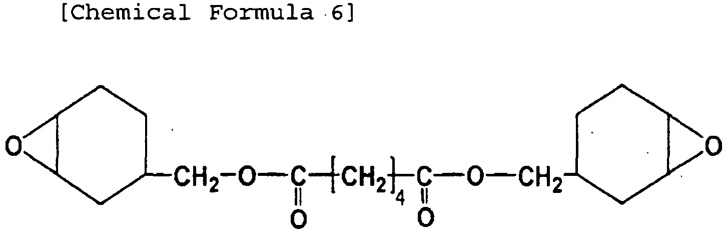 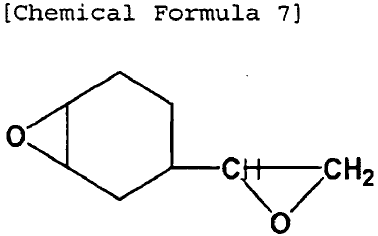 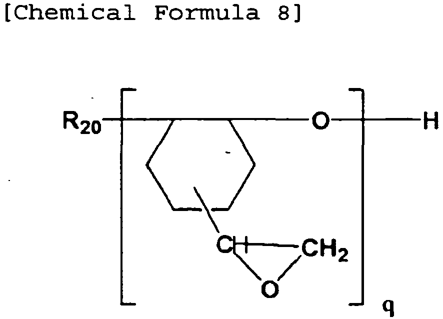
   wherein R₂₀ represents alkyl or trimethylolpropane residue, and q is 1-20. 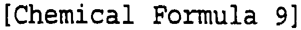 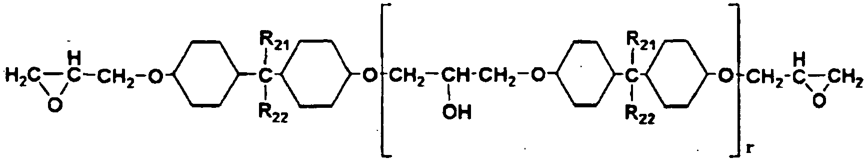
   wherein R₂₁ and R₂₂ may be the same or different, and each represents H or CH₃, and r is 0-2. 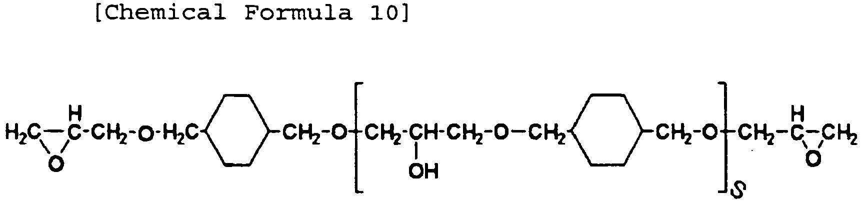 wherein s is 0-2.

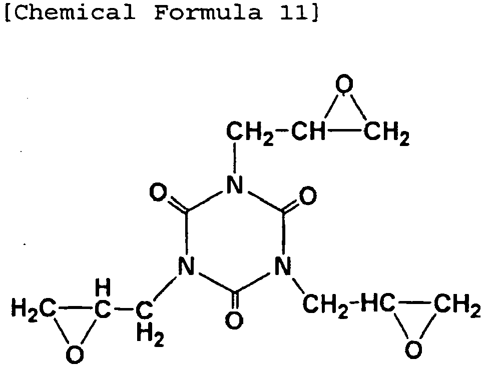

The buffer composition for forming the buffer composition may include organosilane and metal alkoxide, either alone or in combination with each other. The combined amount of organosilane and metal alkoxide is preferably 5-95 parts by weight based on 100 parts by weight of the buffer composition.

The curable epoxy resin may be used in an amount of 5-95 parts by weight based on 100 parts by weight of the buffer composition, and may further include a curing agent in an amount of 1-90 parts by weight based on 100 parts by weight of the buffer composition. In addition, the curable epoxy resin may further include 0.1-20 parts by weight of a catalyst based on 100 parts by weight of the buffer composition.

Preferably, the curable epoxy resin may be prepared by the method including the steps of: mixing 1-90 parts by weight of a curing agent with 0.1-20 parts by weight of a catalyst, based on 100 parts by weight of a buffer composition; and mixing 100 parts by weight of the buffer composition, to which the catalyst is added, with 1-95 parts by weight of an epoxy resin. More preferably, 91 parts by weight of an epoxy curing agent is mixed with 1 part by weight of a catalyst, and the mixture is heated and agitated for 30 minutes. Then, 50 parts by weight of solid epoxy is agitated and melted for 10 minutes, and the catalyst-containing curing agent is mixed with the molten epoxy while being agitated to provide a transparent curable epoxy resin.

As the epoxy resin, the alicyclic epoxy resins represented by the above Chemical Formulae 5-10 and triglycidyl isocyanurate represented by the above Chemical Formula 11 may be used either alone or in combination with each other. In particular, the combination may be formed from two or more epoxy resins and, if desired, by using another epoxy resin to adjust the refractive index so that the combination may have the same refractive index as glass fillers.

Preferred examples of the curing agent include acid anhydride-type curing agents. Examples include at least one curing agent selected from the group consisting of phthalic acid anhydride, maleic acid anhydride, trimellitic acid anhydride, pyromellitic acid anhydride, hexahydrophthalic acid anhydride, tetrahydrophthalic acidic anhydride, methylnadic acid anhydride, nadic acid anhydride, glutaric acid anhydride, methylhexahydrophthalic acid anhydride, methyltetrahydrophthalic acid anhydride, hydrogenated methylnadic acid anhydride and hydrogenated nadic acid anhydride. More particularly, methylhexahydrophthalic acid anhydride and hydrogenated methylnadic acid anhydride are preferred in terms of transparency.

The catalyst is a curing accelerator, and may be at least one catalyst selected from the group consisting of: organic acids as cationic catalysts, including acetic acid, benzoic acid, salicylic acid, para-toluene sulfonic acid, boron trifluoride-amine complex, boron trifluoride ammonium salt, aromatic diazonium salt, aromatic sulfonium salt, aromatic iodonium salt and aluminum complex-containing cationic catalysts; tertiary amines, such as 1,8-diazabicyclo[5.4.0]undecene-7 and triethylene diamine; imidazoles, such as 2-ethyl-4-methylimidazole; phosphorus compounds, such as triphenylphosphine and tetraphenylphosphinium; tetraphenyl borate; quaternary ammonium salt; organometallic salts; and derivatives thereof.

The buffer composition may be prepared from the above-noted compounds, optionally with the addition of fillers and solvents.

The filler may be at least one selected from the group consisting of metal, glass powder, diamond powder, silicon oxide, clay, calcium phosphate, magnesium phosphate, barium sulfate, aluminum trifluoride, calcium silicate, magnesium silicate, barium silicate, barium carbonate, barium hydroxide and aluminum silicate.

There is no particular limitation as to the solvent, as long as the solvent is compatible with or soluble to the epoxy resin, curing agent and catalyst. Particular examples of the solvent include at least one selected from methylene chloride, dichloroethane, dioxane, acetone, methyl ethyl ketone, methyl isobutyl ketone, methanol, ethanol, propanol and isopropanol.

The filler and solvent may be added in a desired amount without any particular limitation.

The formation of a buffer layer using the above-described materials allows the production of a multi-layer film that undergoes minimized deformation when thermally cured, and has a flat surface even at high temperature.

UV curing of the buffer composition is carried out using any method for performing a radical reaction based on a UV light source. Mercury or metal halide lamps may be used alone or in combination with each other. The buffer layer may be imparted with increased surface hardness through the UV curing process.

As described above, buffer compositions on both surfaces of the polymer substrate are UV-cured to increase the surface hardness thereof, and are then subjected to thermal curing to provide a multi-layer film.

The buffer layer serves to alleviate a major difference in linear expansion coefficient from the polymer substrate and to improve the adhesion to the polymer substrate. In addition, the buffer layer may serve to planarize the surface of the polymer substrate.

In another aspect, there is provided a method for producing a multi-layer film, including: (a) coating one surface of a polymer substrate with a UV-curable and thermally curable buffer coating composition to form a buffer layer; (b) carrying out UV curing of the buffer layer formed in step (a); (c) coating the other surface of the polymer surface having the buffer layer on one surface thereof with a UV-curable and thermally curable buffer composition to form a buffer layer; (d) carrying out UV curing of the buffer layer formed in step (c); and (e) carrying out thermal curing of the UV-cured buffer layers provided on both surfaces of the polymer surface.

In another aspect, there is provided a method for producing a multi-layer film, including: (a) coating one surface of a polymer substrate with a UV-curable and thermally curable buffer coating composition to form a buffer layer; (b) carrying out UV curing of the buffer layer; (c) carrying out thermal curing of the UV-cured buffer layer to form a multi-layer film having a structure comprising the buffer layer laminated with the polymer substrate; (d) repeating steps (a)-(c) to provide another multi-layer film having the same structure as mentioned in step (c); and (e) laminating the multi-layer films obtained in steps (c) and (d) with each other, in such a manner that their polymer substrate surfaces are in contact with each other, to form a multi-layer film having a symmetrical structure.

Although there is no particular limitation as to the coating process for the buffer layer, non-limiting examples of the coating process include spin coating, roll coating, bar coating, dip coating, gravure coating and spray coating processes.

The buffer layer formed as described above preferably has a thickness ranging from 0.1-50 µm. When the buffer layer has a thickness less than 0.1 µm, there are problems caused by pinhole defects and current leakage. On the other hand, when the buffer layer has a thickness larger than 50 µm, film deformation may occur during the curing, and surface roughness is formed, thereby degrading flatness.

The surface roughness Ra (average of roughness) of the buffer layer surface is very important. When the buffer layer is not smooth, forming an additional layer on the buffer layer may cause defects.

To solve the above-mentioned problems, the buffer layer preferably has a surface roughness of about 1 nm, more preferably of 1 nm or less. Particularly, the surface roughness Ra may be between 0.1 nm and 1.2 nm.

In the method for producing a multi-layer film, there is no particular limitation as to the UV curing process, as long as the process facilitates a radical reaction using a UV light source. However, mercury or metal halide lamps may be preferably used, either alone or in combination with each other. For example, UV curing may be carried out under an energy dose of 20 mJ/cm² to 3000 mJ/cm² for a period ranging from 1 second to several hours, such as 1 minute or less. Meanwhile, thermal curing may be carried out at a temperature ranging from 100 to 200°C for a period ranging from 1 minute to several hours, such as 1 hour or less, and preferably 10-20 minutes.

The above-described multi-layer film according to the present invention may be imparted with improved surface hardness in an instant by the UV curing, and shows minimized deformation during the thermal curing, so that it may have a linear expansion coefficient as low as 6.5 ppm/K. The multi-layer film according to the present invention has a linear expansion coefficient of 5-30 ppm/K, and preferably 6-20 ppm/K. In addition, the multi-layer film may have a pencil hardness of 2 or more, preferably of 2H-8H. Therefore, the multi-layer film may substitute for heavy and brittle glass substrates that have traditionally been used in display devices. The multi-layer film may also be used as a material in applications requiring an excellent gas barrier property.

In another aspect, there is provided an electronic device, such as an image display device, including the multi-layer film. The multi-layer film according to the present invention may be used as a substrate material of an image display device or a covering material of a display device.

The electronic device includes the multi-layer film as a substrate, and may be realized using a method generally known to those skilled in the art.

The multi-layer film according to the present invention is imparted with improved surface hardness in an instance by UV curing, shows minimized deformation during thermal curing, and has a flat surface even at high temperatures. Therefore, the multi-layer film may substitute for heavy and brittle glass substrates that have traditionally been used in display devices. The multi-layer film may also be used as a material in some applications requiring excellent heat resistance and high-temperature flatness.

The examples will now be described. The following examples are for illustrative purposes only, and are not intended to limit the scope of the present invention.

### Example 1

First, 20 parts by weight of tetraethoxysilane (TEOS) is mixed with 10 parts by weight of glycidoxypropyltrimethoxysilane (GPTMS). Next, 7 parts by weight of distilled water, 20 parts by weight of ethanol and 0.01 parts by weight of HCl are added thereto, and the resultant mixture is subjected to partial hydrolysis at 25 °C for 24 hours to provide a sol. Then, the resultant sol is mixed with 100 parts by weight of an epoxy compound

(Trade name ERL-4221, available from Dow Chemical) and 6 parts by weight of a catalyst, triarylsulfonium hexafluoroantimonate salt mixed 50 wt% in propylene carbonate, to provide an organic/inorganic hybrid buffer composition.

One surface of a PET substrate is bar coated with the buffer composition and the solvent is removed in a convection oven at 90°C for 5 minutes, followed by UV curing. Then, the remaining uncoated surface of the PET substrate is bar coated with the buffer composition and the solvent is removed in a convection oven at 90°C for 5 minutes, followed by UV curing. After that, the buffer composition is thermally cured in a convection oven at 180°C for 1 hour to obtain a PET film coated with the buffer composition on both surfaces thereof.

After the completion of the curing, the buffer layer has a thickness of 10 µm, as measured using an Alpha Stepper. The buffer layer has a surface roughness of 0.4 nm or less per 10 µm X 10 µm unit of area, as measured in a tapping mode of AFM (Atomic Force Microscopy) at room temperature.

The PET film obtained as described above is tested to determine its linear expansion coefficient and pencil hardness, which are the main physical properties required of a substrate for display devices. The results are shown in the following Table 1. The PET film itself has a linear expansion coefficient of 22.4 ppm/K. The physical properties are determined as described hereinafter. The same applies to the following Examples and Comparative Examples.

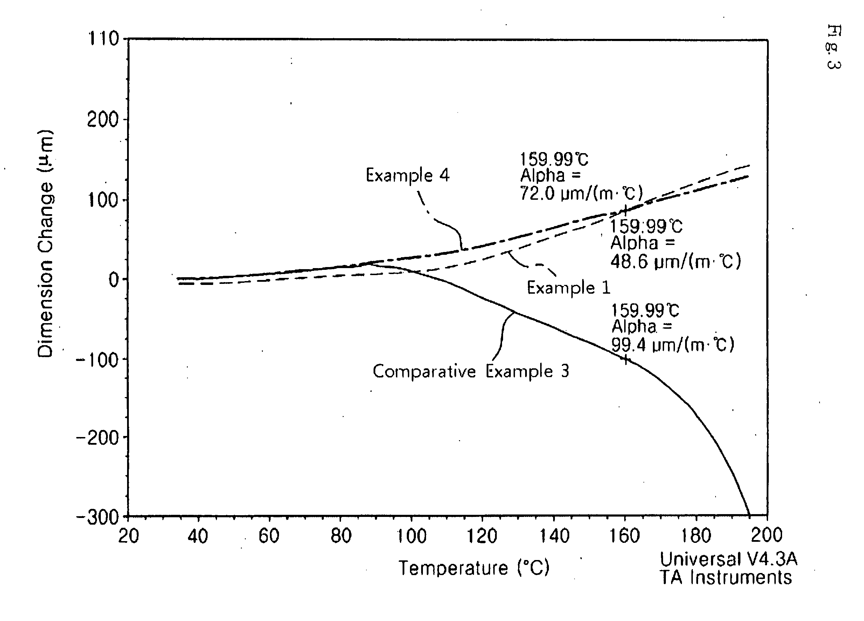

1) Linear Expansion Coefficient: TMA (Thermomechanical Analysis) is used to measure the linear expansion coefficient under a stress of 5 gf at a heating rate of 10°C/minute based on ASTM D696. The linear expansion coefficients of different types of multi-layer films as a function of temperature are shown in FIG. 3.

2) Pencil Hardness: The pencil hardness is measured under a load of 200 g based on ASTM D3363.

Each reported physical property value is the average of at least 5 measurements, and thus is statistically representative and meaningful.

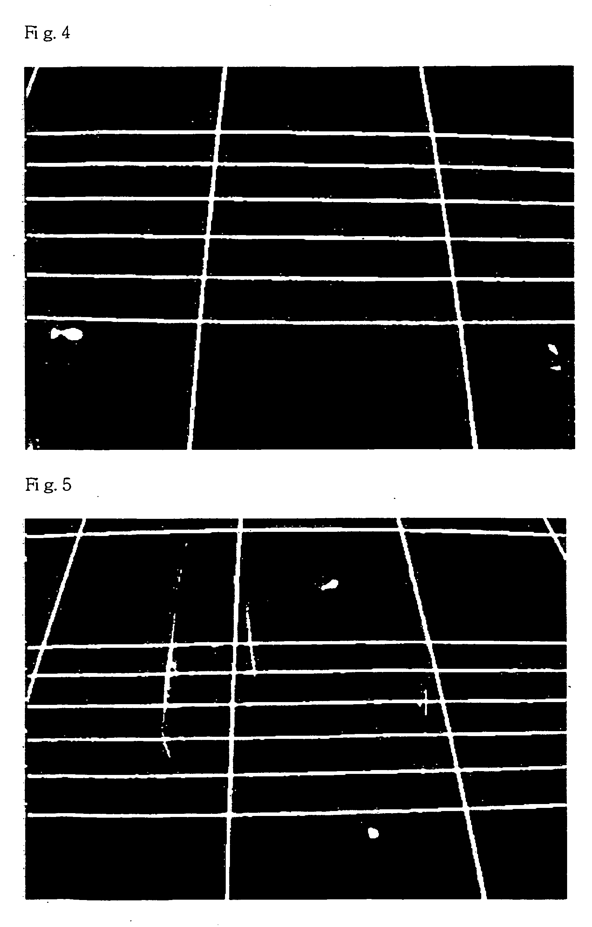

As can be seen from FIG. 4, the substrate according to Example 1 shows no bending when placed on a flat ground. In other words, the substrate according to Example 1 has excellent heat resistance and high-temperature flatness. As shown in Table 1, the plastic substrate obtained according to Example 1 has a small linear expansion coefficient as well as high dimensional stability.

### Example 2

Example 1 is repeated to provide a buffer composition and a film coated therewith, except that 10 parts by weight of an anhydride (MH700G, New Japan Chemical) are further introduced as a curing agent.

### Example 3

Example 1 is repeated to provide a buffer composition and a film coated therewith, except that 80 parts by weight of tetraethoxysilane are mixed with 10 parts by weight of glycidoxypropyltrimethoxysilane, and then 28 parts by weight of distilled water, 80 parts by weight of ethanol and 0.04 parts by weight of HCl are added thereto.

### Example 4

Example 1 is repeated to provide a buffer composition and a film coated therewith, except that 30 parts by weight of colloidal silica (MIBK-ST) are further added.

### Example 5

Example 1 is repeated to provide a buffer composition and a film coated therewith, except that 10 parts by weight of metal alkoxide [Al(OBu)₃] are further introduced, 10 parts by weight of distilled water and 30 parts by weight of ethanol are added, and 30 parts by weight of colloidal silica (MIBK-ST) are further introduced.

### Example 6

First, 20 parts by weight of tetraethoxysilane (TEOS) are mixed with 10 parts by weight of glycidoxypropyltrimethoxysilane (GPTMS). Next, 7 parts by weight of distilled water, 20 parts by weight of ethanol and 0.01 parts by wight of HCl are added thereto, and the resultant mixture is subjected to partial hydrolysis at 25°C for 24 hours to provide a sol. Then, the resultant sol is mixed with 100 parts by weight of an epoxy compound (Trade name ERL-4221, available from Dow Chemical) and 6 parts by weight of triarylsulfonium hexafluoroantimonate salt mixed 50 wt% in propylene carbonate to provide an organic/inorganic hybrid buffer composition.

One surface of a PET substrate is bar coated with the buffer composition, and the solvent is removed in a convection oven at 90°C for 5 minutes, followed by UV curing. Then, the buffer composition is thermally cured in a convection oven at 180°C for 1 hour to obtain a PET film coated with the buffer composition on one surface thereof. The buffer layer has a surface roughness of 0.4 nm or less per 50 µm X 50 µm unit of area, as measured in a tapping mode of AFM (Atomic Force Microscopy) at room temperature.

Then, another multi-layer film is obtained in the same manner as described above.

Finally, the remaining uncoated PET surface of the above-described multi-layer film is bar coated with an adhesive composition based on a multi-functional acrylate oligomer. Then, the multi-layer film is laminated with the polymer substrate of the preliminarily formed multi-layer film obtained as described above, and the resultant laminate is subjected to UV irradiation using a DYMAX 2000-EC for 6 minutes to cure the adhesive composition. In this manner, a plastic substrate having a symmetrical structure is obtained. The substrate according to Example 6 shows no bending when placed on a flat ground.

### Comparative Example 1

A buffer composition is obtained in the same manner as described in Example 1, and one surface of a substrate is bar coated therewith. Then, the solvent is removed in a convection oven at 90°C for 5 minutes. The other surface of the substrate is also bar coated with the buffer composition, and the solvent is removed in a convection oven at 90°C for 5 minutes. After that, thermal curing is carried out in a convection oven at 200°C to obtain a film coated with the buffer composition on both surfaces thereof.

However, thermal curing a film coated on one surface thereof provides a film that does not have a symmetrical structure in the thickness direction. Thus, the film undergoes curling when cured, as can be seen from FIG. 5. In addition, coating the opposite surface after the curing causes blocking of the initially coated surface when the surface is in contact with the ground. Therefore, it is not possible to obtain a clearly coated film.

### Comparative Example 2

A buffer composition is obtained in the same manner as described in Example 1, and one surface of a substrate is bar coated therewith. Then, the solvent is removed in a convection oven at 90°C for 5 minutes, followed by UV curing. The other surface of the substrate is further bar coated with the buffer composition, and the solvent is removed in a convection oven at 90°C for 5 minutes, followed by UV curing, to obtain a film coated with the buffer composition on both surfaces thereof (the additional thermal curing step is eliminated).

UV curing alone does not accomplish complete curing. Thus, the film has low interfacial adhesion, resulting in degradation of physical properties such as pencil hardness.

### Comparative Example 3

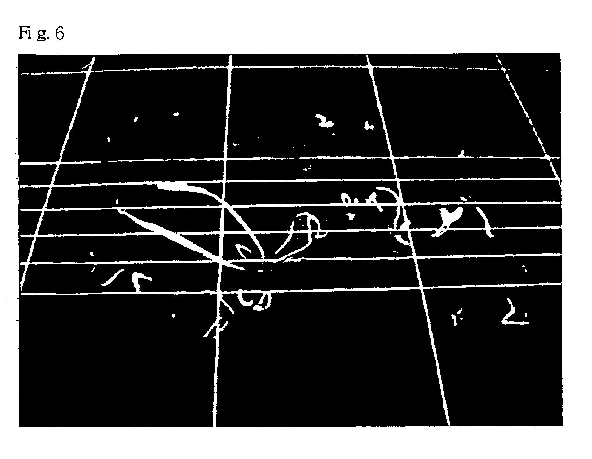

A PET film not coated with the buffer composition according to Example 1 is tested to determine its physical properties. As can be seen from FIG. 6, the film according to Comparative Example 3 undergoes curling and shows poor high-temperature flatness.

**[Table 1]**

| | Linear expansion coefficient | | Pencil hardness (200 g load) | Reference |
|---|---|---|---|---|
| | 100°C or lower | 100 - 200 °C | | |
| Ex. 1 | 12 | 72 | 3H | |
| Ex. 2 | 12 | 65 | 3H | Curing agent added |
| Ex. 3 | 12 | 66 | 4H | Composition modified |
| Ex. 4 | 13 | 48 | 4H | Inorganic material added |
| Ex. 5 | 13 | 50 | 4H | Metal catalyst, inorganic material added |
| Comp. Ex. 1 | 13 | 76 | 4B | Thermal curing alone |
| Comp. Ex. 2 | 15 | 72 | H | UV curing alone |
| Comp. Ex. 3 | 13 | -99 | H | PET substrate itself |

It can be seen from Table 1 that Examples 1-6 according to the present invention have higher pencil hardness than Comparative Examples 1 and 2.

As can be seen from the foregoing, the multi-layer film according to an embodiment of the present invention exhibits improved heat resistance and high-temperature flatness, thereby facilitating processing carried out at temperatures lower than its glass transition temperature (Tg), and is amenable to processing at temperatures higher than its glass transition temperature (Tg) while inhibiting or completely preventing curling, blocking and sagging phenomena.

## Claims

1. A multi-layer film, comprising:
a polymer substrate; and
buffer layers formed on a top surface and a bottom surface of the polymer substrate using a UV-cured and thermally cured product of a UV-curable and thermally curable buffer composition,
wherein the buffer layers comprise a UV-cured and thermally cured product of a mixture of hydrolyzate of at least one of an organosilane and a metal alkoxide with a curable epoxy resin.

2. The multi-layer film according to claim 1, wherein the polymer substrate has a mono-layer structure or a laminated structure comprising two or more polymer layers.

3. The multi-layer film according to claim 1, wherein the polymer substrate comprises at least one selected from a group consisting of a single polymer, a polymer blend of two or more polymers, a polymer composite containing an organic additive, and a polymer composite containing an inorganic additive.

4. The multi-layer film according to claim 3, wherein a polymer of the single polymer or the blend of two or more polymers comprises at least one selected from a group consisting of polynorbornene, aromatic fullerene polyester, polyethersulfone, bisphenol A polysulfone, polyimide, polyethylene terephthalate, polyethylene naphthalene, polyarylate, polycarbonate, and cyclic olefin copolymers.

5. The multi-layer film according to claim 3, wherein the polymer composite containing an inorganic additive is a polymer-clay nanocomposite comprising a clay nanosubstance dispersed in a polymer matrix.

6. The multi-layer film according to claim 1, wherein the buffer layers comprise non-cured epoxy groups in an amount equal to or greater than 10 wt% and less than 100 wt%.

7. The multi-layer film according to claim 1, wherein the organosilane comprises at least one selected from a group consisting of compounds represented by the following Chemical Formulae 1 to 3, the metal alkoxide comprises at least one selected from a group consisting of compounds represented by the following Chemical Formula 4, and the curable epoxy resin comprises at least one selected from a group consisting of alicyclic epoxy resins, represented by the following Chemical Formulae 5 to 10, and triglycidyl isocyanurates, represented by the following Chemical Formula 11:
[Chemical Formula 1] (R¹)ₘ-Si-X₍₄₋ₘ₎
[Chemical Formula 2] (R¹)ₘ-O-Si-X₍₄₋ₘ₎
[Chemical Formula 3] (R¹)ₘ-N(R²)-Si-X₍₄₋ₘ₎
wherein X(s) may be the same or different, and each represents H, halogen, a C1-C12 alkoxy, acyloxy, alkylcarbonyl, alkoxycarbonyl or -N(R²)₂;
R¹(s) may be the same or different, and each represents a C1-C12 alkyl, C2-C12 alkenyl, alkynyl, C6-C20 aryl, arylalkyl, alkylaryl, arylalkenyl, alkenylaryl, arylalkynyl, alkynylaryl, halogen, amide, aldehyde, ketone, alkylcarbonyl, carboxy, mercapto, cyano, hydroxyl, C1-C12 alkoxy, C1-C12 alkoxycarbonyl, sulfonic acid, phosphoric acid, acryloxy, methacryloxy, epoxy or vinyl group;
R² is H or C1-C12 alkyl; and
m is an integer of 1-3.
[Chemical Formula 4] M-(R³)_{z}
wherein M is a metal element selected from aluminum, zirconium and titanium;
R³(s) may be the same or different, and each represents halogen or a C1-C12 alkyl, alkoxy, acyloxy or hydroxyl group; and
Z is an integer of 3 or 4. 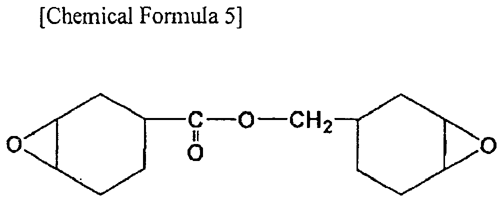 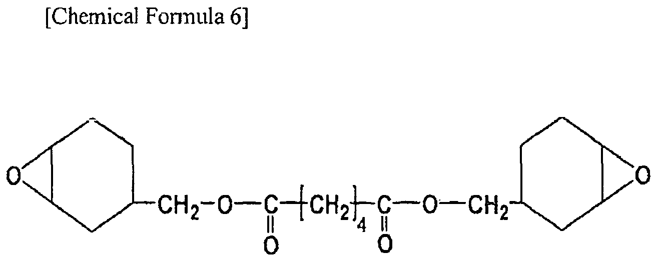 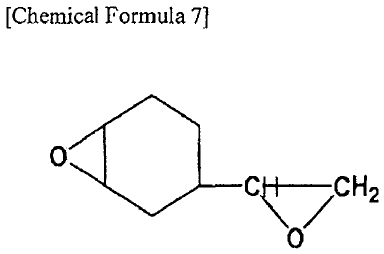 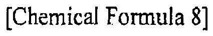 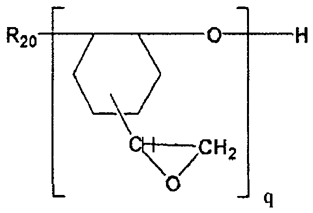
wherein R₂₀ represents alkyl or trimethylolpropane residue, and q is 1-20. 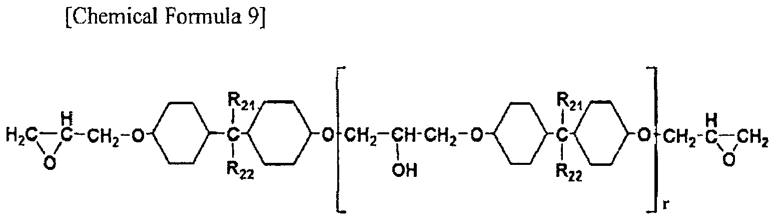 wherein R₂₁ and R₂₂ may be the same or different, and each represents H or CH₃, and r is 0-2. 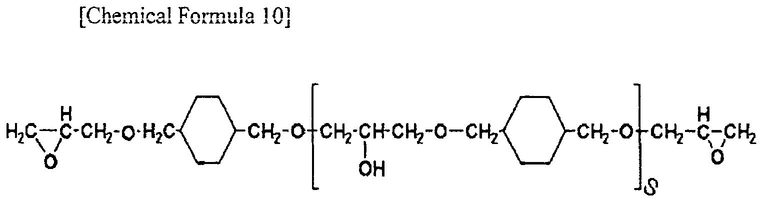 wherein s is 0-2.

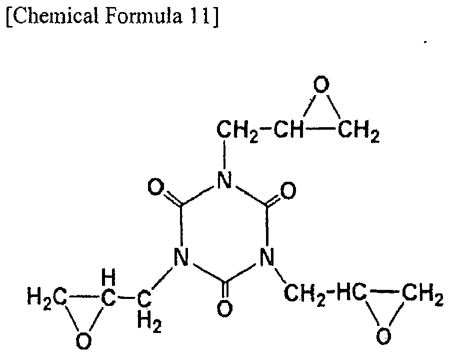

8. The multi-layer film according to claim 1, wherein the hydrolyzate of at least one of organosilane and metal alkoxide is present in an amount of 5-95 parts by weight and the curable epoxy resin is present in an amount of 5-95 parts by weight, based on 100 parts by weight of the cured product.

9. The multi-layer film according to claim 1, wherein the buffer layers further comprise at least one filler selected from a group consisting of metal, glass powder, diamond powder, silicon oxide, clay, calcium phosphate, magnesium phosphate, barium sulfate, aluminum trifluoride, calcium silicate, magnesium silicate, barium silicate, barium carbonate, barium hydroxide and aluminum silicate, a curing agent, a catalyst and a solvent.

10. The multi-layer film according to claim 1, wherein the buffer layers have a thickness of 0.1 µm-50 µm.

11. The multi-layer film according to claim 1, which has a linear expansion coefficient, measured on the basis of ASTM D696 by using the thermomechnical analysis (TMA) under the stress of 5 gf while the temperature was increased at the rate of 10°C per minute, of 5-30 ppm/K.

12. The multi-layer film according to claim 1, which has a pencil hardness of 2H-8H, measured under a load of 200 g by the ASTM D3363 method.

13. A method for producing a multi-layer film, comprising:
(a) coating one surface of a polymer substrate with a UV-curable and thermally curable buffer coating composition to form a buffer layer;
(b) carrying out UV curing of the buffer layer formed in step (a);
(c) coating another surface of the polymer substrate having the buffer layer on one surface thereof with a UV-curable and thermally curable buffer composition to form a buffer layer;
(d) carrying out UV curing of the buffer layer formed in step (c); and
(e) carrying out thermal curing of the UV-cured buffer layers provided on both surfaces of the polymer surface,
wherein the buffer layers comprise a UV-cured and thermally cured product of a mixture of hydrolyzate of at least one of an organosilane and a metal alkoxide with a curable epoxy resin.

14. A method for producing a multi-layer film, comprising:
(a) coating one surface of a polymer substrate with a UV-curable and thermally curable buffer coating composition to form a buffer layer;
(b) carrying out UV curing of the buffer layer;
(c) carrying out thermal curing of the UV-cured buffer layer to form a multi-layer film having a structure comprising the buffer layer laminated with the polymer substrate;
(d) repeating steps (a)-(c) to provide another multi-layer film having the same structure mentioned in step (c); and
(e) laminating the multi-layer films obtained in steps (c) and (d) together, in such a manner that the polymer substrate surfaces thereof are in contact with each other, to form a multi-layer film having a symmetrical structure
wherein the buffer layers comprise a UV-cured and thermally cured product of a mixture of hydrolyzate of at least one of an organosilane and a metal alkoxide with a curable epoxy resin.

15. The method according to claim 13 or 14, wherein the UV curing is carried out under an energy dose ranging from 20 mJ/cm² to 3000 mJ/cm² for a period ranging from 1 second to several hours, and the thermal curing is carried out at a temperature of 100-200°C for a period ranging from 1 minute to several hours.

16. An electronic device comprising the multi-layer film defined in any one of claims 1 to 12.

17. A buffer composition comprising a sol-like composition of hydrolyzate of at least one of an organosilane and a metal alkoxide, and a curable epoxy resin,
wherein the organosilane comprises at least one selected from a group consisting of compounds represented by the following Chemical Formulae 1 to 3, the metal alkoxide comprises at least one selected from a group consisting of compounds represented by the following Chemical Formula 4, and the curable epoxy resin comprises at least one selected from a group consisting of alicyclic epoxy resins represented by the following Chemical Formulae 5 to 10 and triglycidyl isocyanurates represented by the following Chemical Formula 11:
[Chemical Formula 1] (R¹)ₘ-Si-X₍₄₋ₘ₎
[Chemical Formula 2] (R¹)ₘ-O-Si-X₍₄₋ₘ₎
[Chemical Formula 3] (R¹)ₘ-N(R²)-Si-X₍₄₋ₘ₎
wherein X(s) may be the same or different, and each represents H, halogen, a C1-C12 alkoxy, acyloxy, alkylcarbonyl, alkoxycarbonyl or -N(R²)₂;
R¹(s) may be the same or different, and each represents a C1-C12 alkyl, C2-C12 alkenyl, alkynyl, C6-C20 aryl, arylalkyl, alkylaryl, arylalkenyl, alkenylaryl, arylalkynyl, alkynylaryl, halogen, amide, aldehyde, ketone, alkylcarbonyl, carboxy, mercapto, cyano, hydroxyl, C1-C12 alkoxy, C1-C12 alkoxycarbonyl, sulfonic acid, phosphoric acid, acryloxy, methacryloxy, epoxy or vinyl group;
R² is H or C1-C12 alkyl; and
m is an integer of 1-3.
[Chemical Formula 4] M-(R³)_{z}
wherein M is a metal element selected from aluminum, zirconium and titanium;
R³(s) may be the same or different, and each represents halogen, C1-C12 alkyl, alkoxy, acyloxy or hydroxyl group; and
Z is an integer of 3 or 4. 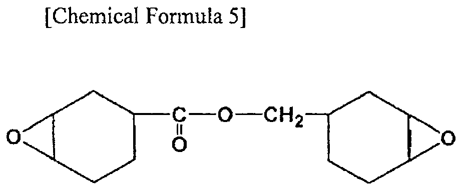 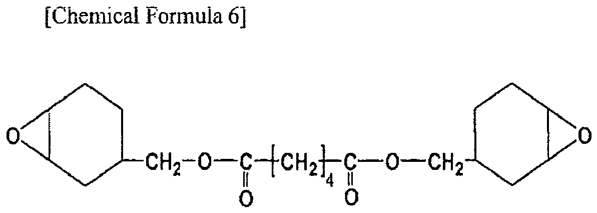 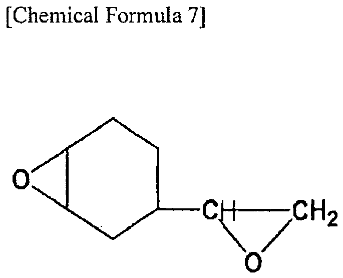 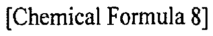 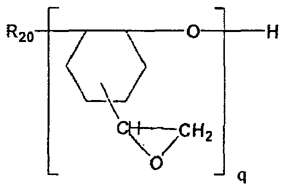
wherein R₂₀ represents alkyl or trimethylolpropane residue, and q is 1-20. 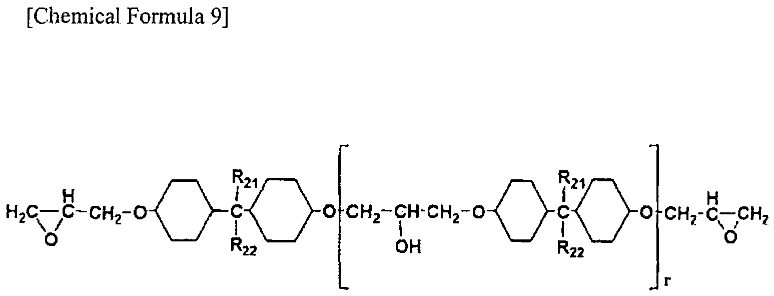 wherein R₂₁ and R₂₂ may be the same or different, and each represents H or CH₃, and r is 0-2. 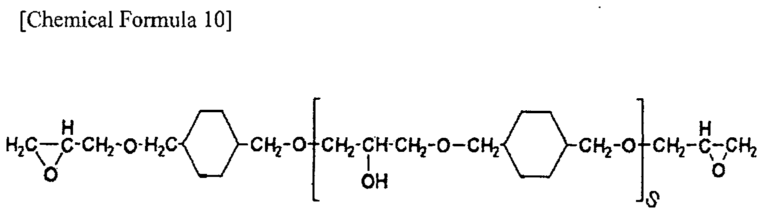 wherein s is 0-2.

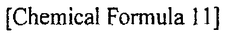

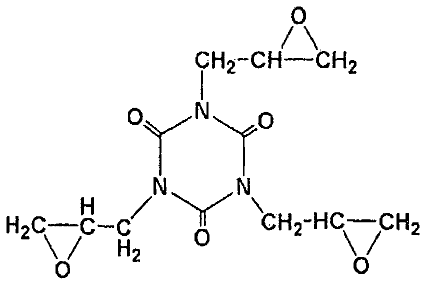

## Patentansprüche

1. Mehrschichtfilm umfassend:
ein Polymersubstrat; und
Pufferschichten, die auf einer Oberseite und einer Unterseite des Polymersubstrats unter Verwendung eines UV-gehärteten und thermisch gehärteten Produktes einer UV-härtbaren und thermisch härtbaren Pufferzusammensetzung gebildet sind,
wobei die Pufferschichten ein UV-gehärtetes und thermisch gehärtetes Produkt einer Hydrolysatmischung von mindestens einem aus einem Organosilan und einem Metallalkoxid mit einem härtbaren Epoxidharz umfassen.

2. Mehrschichtfilm nach Anspruch 1, wobei das Polymersubstrat eine Monoschichtstruktur oder eine laminierte Struktur, welche zwei oder mehrere Polymerschichten einschließt, aufweist.

3. Mehrschichtfilm nach Anspruch 1, wobei das Polymersubstrat mindestens eines ausgewählt aus der Gruppe bestehend aus einem einzelnen Polymer, einer Polymermischung aus zwei oder mehreren Polymeren, einem Polymerverbund enthaltend einen organischen Zusatz und einem Polymerverbund enthaltend einen anorganischen Zusatz umfasst.

4. Mehrschichtfilm nach Anspruch 3, wobei ein Polymer des einzelnen Polymers oder der Mischung aus zwei oder mehreren Polymeren mindestens eines ausgewählt aus der Gruppe bestehend aus Polynorbornen, aromatischem Fullerenpolyester, Polyethersulfon, Bisphenol-A-polysulfon, Polyimid, Polyethylenterephthalat, Polyethylennaphthalen, Polyarylat, Polycarbonat und cyclischen Olefincopolymeren umfasst.

5. Mehrschichtfilm nach Anspruch 3, wobei der Polymerverbund, der einen anorganischen Zusatz enthält, ein Polymer-Ton-Nanoverbund ist, welcher eine Ton-Nanosubstanz dispergiert in einer Polymermatrix umfasst.

6. Mehrschichtfilm nach Anspruch 1, wobei die Pufferschichten nicht-gehärtete Epoxidgruppen in einer Menge gleich oder größer als 10 Gew.-% und weniger als 100 Gew-% umfasst.

7. Mehrschichtfilm nach Anspruch 1, wobei das Organosilan mindestens eines ausgewählt aus der Gruppe bestehend aus Verbindungen, welche durch die folgenden chemischen Formeln 1 bis 3 dargestellt sind, umfasst, das Metallalkoxid mindestens eines ausgewählt aus der Gruppe bestehend aus Verbindungen, welche durch die folgende chemische Formel 4 dargestellt ist, umfasst, und das härtbare Epoxidharz mindestens eines ausgewählt aus der Gruppe bestehend aus alicyclischen Epoxidharzen, welche durch die folgenden chemischen Formeln 5 bis 10 dargestellt sind, und Triglyceridylisocyanurate, welche durch die folgende chemische Formel 11 dargestellt sind, umfasst:
[Chemische Formel 1] (R¹)ₘ-Si-X₍₄₋ₘ₎
[Chemische Formel 2] (R¹)ₘ-O-Si-X₍₄₋ₘ₎
[Chemische Formel 3] (R¹)ₘN(R²)-Si-X₍₄₋ₘ₎
wobei X(s) gleich oder verschieden voneinander sein kann und jeweils H, Halogen, C₁-C₁₂-Alkoxy, Acyloxy, Alkylcarbonyl, Alkoxycarbonyl oder -N(R²)₂ darstellt;
R¹(s) gleich oder verschieden sein kann und jeweils eine C₁-C₁₂-Alkyl-, C₂-C₁₂-Alkenyl-, Alkinyl-, C₆-C₂₀-Aryl-, Arylalkyl-, Alkylaryl-, Arylalkenyl-, Alkenylaryl-, Arylalkinyl-, Alkinylaryl-, Halogen-, Amid-, Aldehyd-, Keton-, Alkylcarbonyl-, Carboxy-, Mercapto-, Cyano-, Hydroxy-, C₁-C₁₂-Alkoxy-, C₁-C₁₂-Alkoxycarbonyl-, Sulfonsäure-, Phosphorsäure-, Acryloxy-, Methacryloxy-, Epoxy- oder Vinylgruppe darstellt;
R² H oder C₁-C₁₂-Alkyl ist; und
m eine ganze Zahl von 1-3 ist,
[Chemische Formel 4] M-(R³)_{z}
wobei M ein Metallelement, ausgewählt aus Aluminium, Zirkonium und Titan, ist;
R³(s) gleich oder verschieden sein kann und jeweils Halogen oder eine C₁-C₁₂-Alkyl-, Alkoxy-, Acyloxy- oder eine Hydroxygruppe darstellt; und
Z eine ganze Zahl von 3 oder 4 ist, 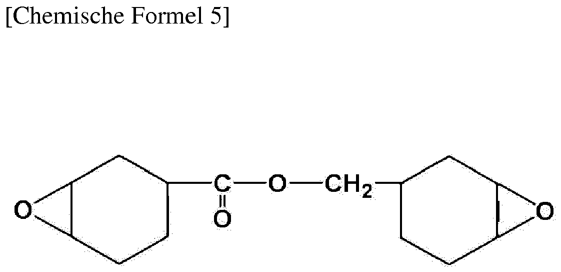 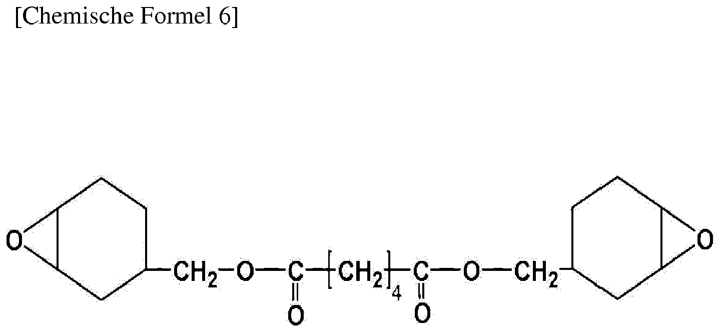 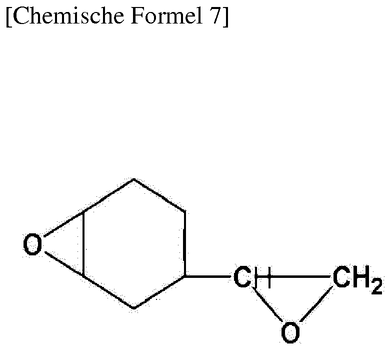 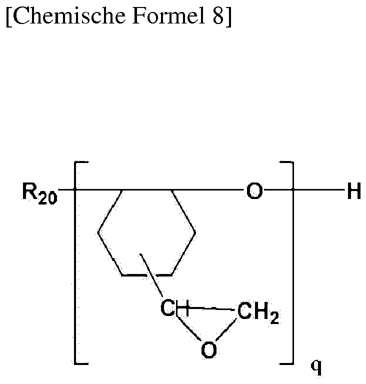
wobei R₂₀ Alkyl oder einen Trimethylolpropanrest darstellt und q 1-20 ist, 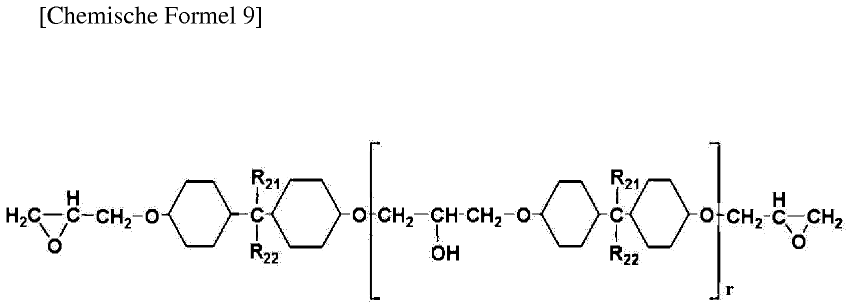 wobei R₂₁ und R₂₂ gleich oder verschieden sein können und jeweils H oder CH₃ darstellen und r 0-2 ist, 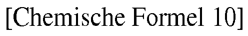 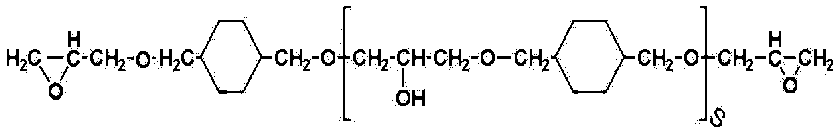 wobei s 0-2 ist,

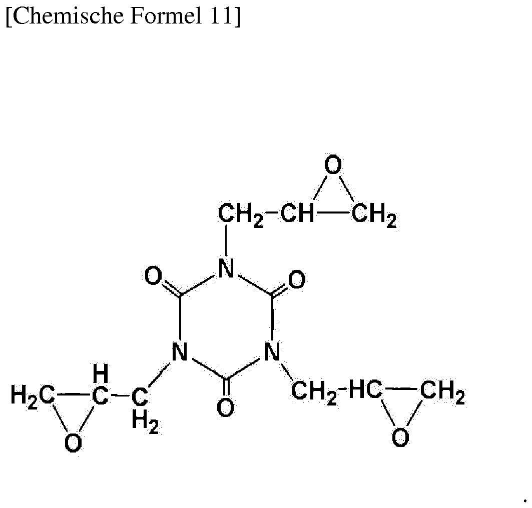

8. Mehrschichtfilm nach Anspruch 1, wobei das Hydrolysat von mindestens einem aus Organosilan und Metallalkoxid in einer Menge von 5-95 Gewichtsteilen vorhanden ist und das härtbare Epoxidharz in einer Menge von 5-95 Gewichtsteilen, basierend auf 100 Gewichtsteilen des gehärteten Produktes, vorhanden ist.

9. Mehrschichtfilm nach Anspruch 1, wobei die Pufferschichten weiter mindestens einen Füllstoff ausgewählt aus der Gruppe bestehend aus Metall, Glaspuder, Diamantpuder, Siliciumoxid, Ton, Calciumphosphat, Magnesiumphosphat, Bariumsulfat, Aluminiumtrifluorid, Calciumsilikat, Magnesiumsilikat, Bariumsilikat, Bariumcarbonat, Bariumhydroxid und Aluminiumsilikat, ein Härtemittel, einen Katalysator und ein Lösungsmittel umfassen.

10. Mehrschichtfilm nach Anspruch 1, wobei die Pufferstrukturen eine Dicke von 0,1 µm bis 50 µm aufweisen.

11. Mehrschichtfilm nach Anspruch 1, welcher einen linearen Expansionskoeffizienten, gemessen auf der Grundlage von ASTM D696 durch Verwenden der thermomechanischen Analyse (TMA) unter der Beanspruchung von 5 gf, während die Temperatur in Raten von 10°C pro Minute erhöht wurde, von 5-30 ppm/K aufweist.

12. Mehrschichtfilm nach Anspruch 1, welcher eine Bleistifthärte von 2H-8H, gemessen durch das ASTM D3363-Verfahren unter einer Belastung von 200 g, aufweist.

13. Verfahren zur Herstellung eines Mehrschichtfilms umfassend:
(a) Beschichten einer Oberfläche eines Polymersubstrats mit einer UV-härtbaren und thermisch härtbaren Pufferbeschichtungszusammensetzung zur Bildung einer Pufferschicht;
(b) UV-Härten der Pufferschicht, die in Schritt (a) gebildet wird;
(c) Beschichten einer anderen Oberfläche des mit auf einer Oberfläche Pufferbeschichteten Polymersubstrats mit einer UV-härtbaren und thermisch härtbaren Pufferzusammensetzung zur Bildung einer Pufferschicht;
(d) UV-Härten der Pufferschicht, die in Schritt (c) gebildet wird; und
(e) thermisches Härten der UV-gehärteten Pufferschichten, die auf beiden Oberflächen der Polymeroberfläche bereitgestellt werden,
wobei die Pufferschichten ein UV-gehärtetes und thermisch gehärtetes Produkt einer Hydrolysatmischung von mindestens einem aus einem Organosilan und einem Metallalkoxid mit einem härtbaren Epoxidharz umfassen.

14. Verfahren zur Herstellung eines Mehrschichtfilms umfassend:
(a) Beschichten einer Oberfläche eines Polymersubstrats mit einer UV-härtbaren und thermisch härtbaren Pufferbeschichtungszusammensetzung zur Bildung einer Pufferschicht;
(b) UV-Härten der Pufferschicht;
(c) thermisches Härten der UV-gehärteten Pufferschicht zur Bildung eines Mehrschichtfilms mit einer Struktur, die die mit den Polymersubstrat laminierte Pufferschicht umfasst;
(d) Wiederholen der Schritte (a)-(c) zur Bereitstellung eines anderen Mehrschichtfilms mit der gleichen Struktur, welche in Schritt (c) erwähnt wird; und
(e) Zusammenlaminieren der Mehrschichtfilme, die in den Schritten (c) und (d) erhalten werden, in einer Weise, dass die Polymersubstratoberflächen in Kontakt miteinander sind, um einen Mehrschichtfilm mit einer symmetrischen Struktur zu bilden,
wobei die Pufferschichten ein UV-gehärtetes und thermisch gehärtetes Produkt einer Hydrolysatmischung von mindestens einem aus einem Organosilan und einem Metalloxid mit einem härtbaren Epoxidharz umfasst.

15. Verfahren nach Anspruch 13 oder 14, wobei das UV-Härten mit einer Energiedosis zwischen 20 mJ/cm² bis 3000 mJ/cm² für einen Zeitraum von 1 Sekunde bis mehreren Stunden durchgeführt wird und das thermische Härten bei einer Temperatur von 100-200°C für einen Zeitraum von 1 Minute bis mehreren Stunden durchgeführt wird.

16. Elektronische Vorrichtung umfassend den Mehrschichtfilm, der in einem der Ansprüche 1 bis 12 definiert ist.

17. Pufferzusammensetzung umfassend eine Sol-ähnliche Zusammensetzung von Hydrolysat von mindestens einem aus einem Organosilan und einem Metalloxid und ein härtbares Epoxidharz,
wobei das Organosilan mindestens eines ausgewählt aus der Gruppe bestehend aus Verbindungen, welche durch die folgenden chemischen Formeln 1 bis 3 dargestellt sind, umfasst, das Metallalkoxid mindestens eines ausgewählt aus der Gruppe bestehend aus Verbindungen, welche durch die folgende chemische Formel 4 dargestellt sind, umfasst, und das härtbare Epoxidharz mindestens eines ausgewählt aus der Gruppe bestehend aus alicyclischen Epoxidharzen, welche durch die folgenden chemischen Formeln 5 bis 10 dargestellt sind, und Triglyceridylisocyanuraten, welche durch die folgende chemische Formel 11 dargestellt sind, umfasst:
[Chemische Formel 1] (R¹)ₘ-Si-X₍₄₋ₘ₎
[Chemische Formel 2] (R¹)ₘ-O-Si-X₍₄₋ₘ₎
[Chemische Formel 3] (R¹)ₘN(R²)-Si-₍₄₋ₘ₎
wobei X(s) gleich oder verschieden voneinander sein kann und jeweils H, Halogen, C₁-C₁₂-Alkoxy, Acyloxy, Alkylcarbonyl, Alkoxycarbonyl oder -N(R²)₂ darstellt;
R¹(s) gleich oder verschieden sein kann und jeweils eine C₁-C₁₂-Alkyl-, C₂-C₁₂-Alkenyl-, Alkinyl-, C₆-C₂₀-Aryl-, Arylalkyl-, Alkylaryl-, Arylalkenyl-, Alkenylaryl-, Arylalkinyl-, Alkinylaryl-, Halogen-, Amid-, Aldehyd-, Keton-, Alkylcarbonyl-, Carboxy, Mercapto-, Cyano-, Hydroxy-, C₁-C₁₂-Alkoxy-, C₁-C₁₂-Alkoxycarbonyl-, Sulfonsäure-, Phosphorsäure-, Acryloxy-, Methacryloxy-, Epoxy- oder Vinylgruppe darstellt;
R² H oder C₁-C₁₂-Alkyl ist; und
m eine ganze Zahl von 1-3 ist,
[Chemische Formel 4] M-(R³)_{z}
wobei M ein Metallelement, ausgewählt aus Aluminium, Zirkonium und Titan, ist;
R³(s) gleich oder verschieden sein kann und jeweils Halogen-, C₁-C₁₂-Alkyl-, Alkoxy-, Acyloxy- oder Hydroxygruppe darstellt; und
Z eine ganze Zahl von 3 oder 4 ist, 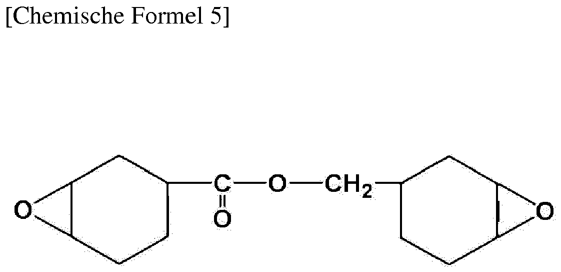 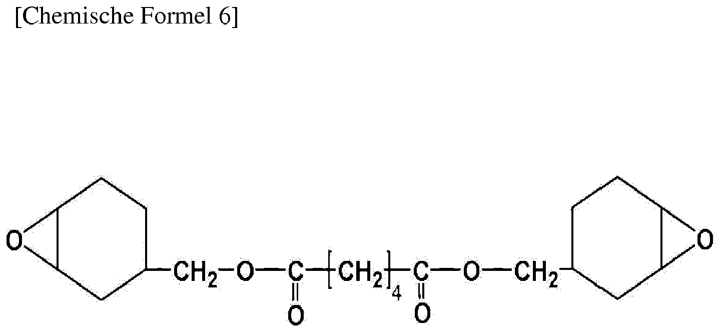 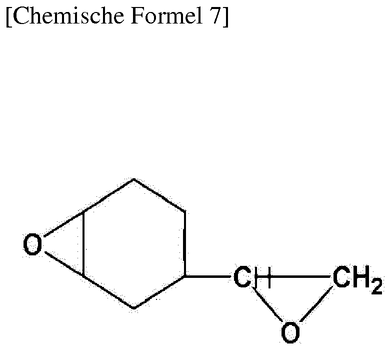 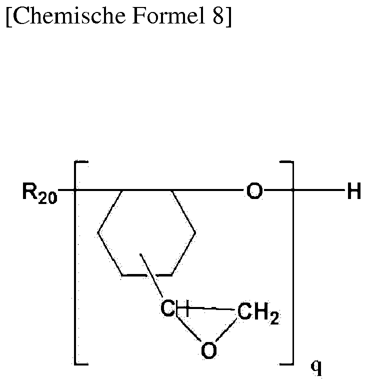
wobei R₂₀ Alkyl oder einen Trimethylolpropanrest darstellt und q 1-20 ist, 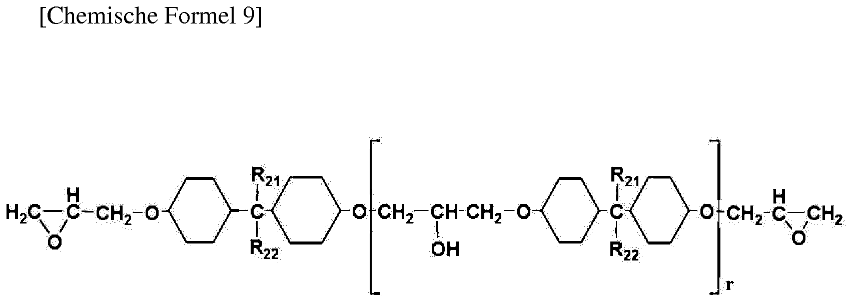 wobei R₂₁ und R₂₂ gleich oder verschieden sein können und jeweils H oder CH₃ darstellen und r 0-2 ist, 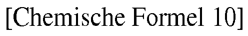 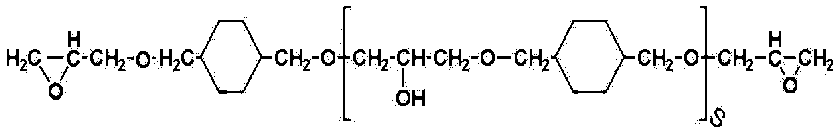 wobei s 0-2 ist,

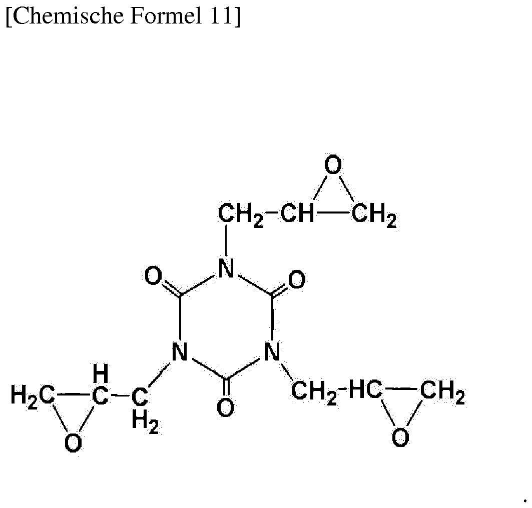

## Revendications

1. Film multicouche comprenant :
un substrat polymère ; et
des couches tampon formées sur une surface supérieure et une surface inférieure du substrat polymère en utilisant un produit durci au rayonnement UV et thermiquement durci d'une composition tampon durcissable au rayonnement UV et thermiquement durcissable,
dans lequel les couches tampon comprennent un produit durci au rayonnement UV et thermiquement durci d'un mélange d'hydrolysat d'au moins un d'un organosilane et d'un alcoxyde métallique avec une résine époxy durcissable.

2. Film multicouche selon la revendication 1, dans lequel le substrat polymère présente une structure monocouche ou une structure stratifiée comprenant deux ou plusieurs couches polymère.

3. Film multicouche selon la revendication 1, dans lequel le substrat polymère comprend au moins un composant sélectionné parmi un groupe constitué d'un polymère simple, d'un mélange de polypolymères composé de deux ou plusieurs polymères, d'un composite polymère contenant un additif organique et d'un composite polymère contenant un additif inorganique.

4. Film multicouche selon la revendication 3, dans lequel un polymère du polymère simple ou le mélange composé de deux ou de plusieurs polymères comprend au moins un composant sélectionné parmi un groupe constitué de polynorbornène, de polyester fullerène aromatique, de polyéthersulfone, de polysulfone de bisphénol A, de polyimide, de téréphtalate de polyéthylène, de polynaphtalène d'éthylène, de polyarylate, de polycarbonate et de copolymères d'oléfine cyclique.

5. Film multicouche selon la revendication 3, dans lequel le composite polymère contenant un additif inorganique est un polymère nanocomposite argileux renfermant une nanosubstance argileuse dispersée dans une matrice polymérique.

6. Film multicouche selon la revendication 1, dans lequel les couches tampon comprennent des groupes époxy non durcis selon une quantité égale ou supérieure à 10 % en poids et inférieure à 100 % en poids.

7. Film multicouche selon la revendication 1, dans lequel l'organosilane comprend au moins un composant sélectionné parmi un groupe constitué des composants représentés par les Formules 1 à 3 suivantes, l'alcoxyde métallique comprend au moins un composant sélectionné parmi un groupe constitué des composants représentés par la Formule chimique 4 suivante et la résine époxy durcissable comprend au moins un composant sélectionné parmi un groupe constitué de résines époxy alicycliques représentées par les Formules chimiques 5 à 10 suivantes et des isocyanurates de triglycidyle représentés par la Formule chimique 11 qui fait suite :
[Formule chimique 1] (R¹)ₘ-Si-X₍₄₋ₘ₎
[Formule chimique 2] (R¹)ₘ-O-Si-X₍₄₋ₘ₎
[Formule chimique 3] (R¹)ₘ-N(R²)-S1-X₍₄₋ₘ₎
dans lesquelles les X peuvent être identiques ou différents et chacun représente H, un halogène, un alcoxy en C1 à C12, un acyloxy, un alkylcarbonyle, un alcoxycarbonyle ou -N(R²)₂ ;
les R¹ peuvent être identiques ou différents et chacun représente un alkyle en C1 à C12, un alkényle en C2 à C12, un alkynyle, un aryle en C6 à C20, un arylalkyle, un alkylaryle, un arylalkényle, un alkénylaryle, un arylalkynyle, un alkynylaryle, un halogène, une amide, un aldéhyde, une cétone, un alkylcarbonyle, un carboxy, un mercapto, un cyano, un hydroxyle, un alcoxy en C1 à C12, un alcoxycarbonyle en C1 à C12, un acide sulfonique, un acide phosphorique, un acryloxy, un méthacryloxy, un groupe époxy ou un groupe vinyle;
R² représente H ou un alkyle en C1 à C12 ; et
m est un entier compris entre 1 à 3.
[Formule chimique 4] M-(R³)_{z}
dans laquelle M représente un élément métallique sélectionné parmi l'aluminum, le zirconium et le titane ;
les R³ peuvent être identiques ou différents et chacun représente l'halogène ou un alkyle en C1 à C12, un alcoxy, un acyloxy ou un groupe hydroxyle ; et
Z représente un entier valant 3 ou 4. 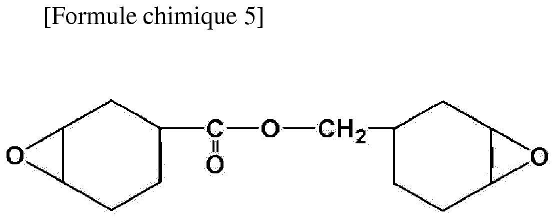 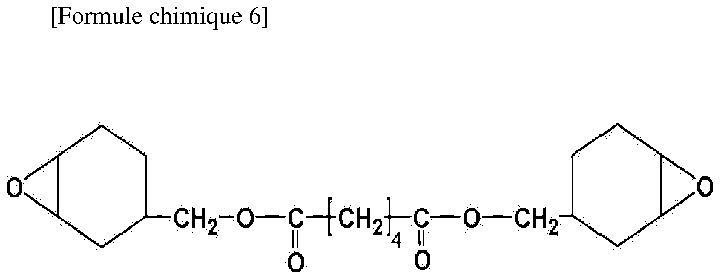 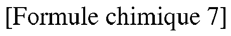 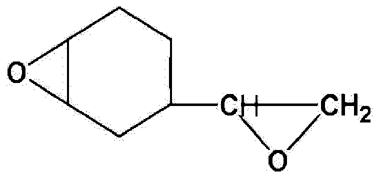 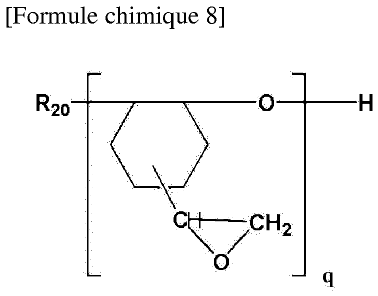
dans laquelle R₂₀ représente un résidu d'alkyle ou de triméthylolpropane et q vaut 1 à 20. 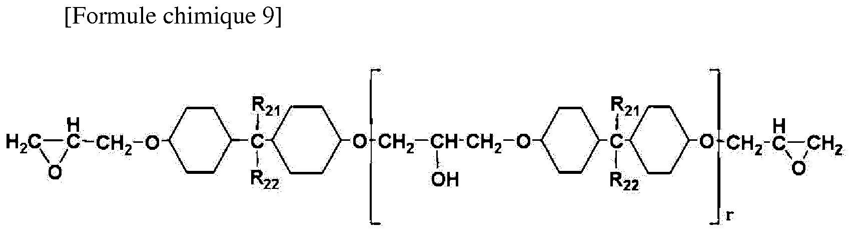 dans laquelle R₂₁ et R₂₂ peuvent être identiques ou différents et chacun représente H ou CH₃ et r vaut 0 à 2. 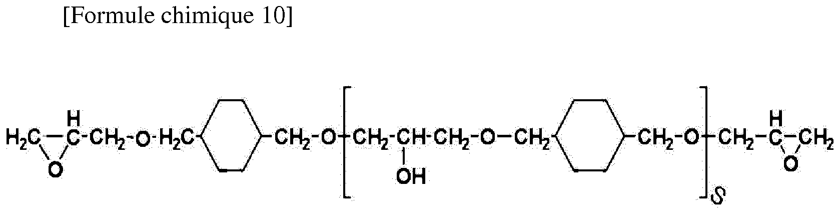 dans laquelle s vaut 0 à 2.

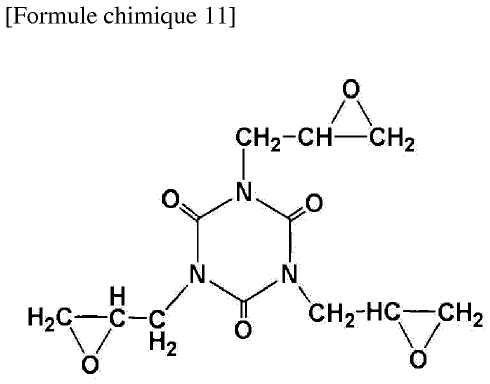

8. Film multicouche selon la revendication 1, dans lequel l'hydrolysat d'au moins un de l'organosilane et de l'alcoxyde métallique est présent selon une quantité de 5 à 95 parties en poids et la résine époxy durcissable est présente selon une quantité de 5 à 95 parties en poids par rapport à 100 parties en poids du produit durci.

9. Film multicouche selon la revendication claim 1, dans lequel les couches tampon comprennent en outre au moins une charge sélectionnée parmi un groupe constitué de métal, de poudre de verre, de poudre de diamant, d'oxyde de silicium, d'argile, de phosphate de calcium, de phosphate de magnésium, de sulfate de baryum, de trifluorure d'aluminum, de silicate de calcium, de silicate de magnésium, de silicate de baryum, de carbonate de baryum, d'hydroxyde de baryum et de silicate d'aluminium, d'un agent de durcissement, d'un catalyseur et d'un solvant.

10. Film multicouche selon la revendication 1, dans lequel les couches tampon ont une épaisseur de 0,1 µm à 50 µm.

11. Film multicouche selon la revendication 1, qui a un coefficient d'expansion linéaire, mesuré sur la base de la méthode ASTM D696 par l'utilisation d'une analyse thermomécanique (TMA pour *thermomechanical analysis*) sous une contrainte de 5 gf tandis que la température était augmentée d'environ 10°C par minute, de 5 à 30 ppm/K.

12. Film multicouche selon la revendication 1, qui a une dureté de mine de crayon de 2H à 8H, mesurée sous une charge de 200 g selon la méthode ASTM D3363.

13. Procédé de production d'un film multicouche comprenant les étapes consistant à :
(a) revêtir une surface d'un substrat polymère avec une composition de revêtement de tampon durcissable au rayonnement UV et thermiquement durcissable afin de former une couche tampon ;
(b) effectuer un durcissement au rayonnement UV de la couche tampon formée à l'étape (a) ;
(c) revêtir une autre surface du substrat polymère ayant la couche tampon sur une surface du substrat avec une composition de tampon durcissable au rayonnement UV et thermiquement durcissable de manière à former une couche tampon ;
(d) effectuer un durcissement au rayonnement UV de la couche tampon formée à l'étape (c) ; et
(e) effectuer un durcissement thermique des couches tampon durcies au rayonnement UV fournies sur les deux surfaces de la couverture polymère,
dans lequel les couches tampon comprennent un produit durci au rayonnement UV et thermiquement durci d'un mélange d'hydrolysat composé d'au moins un organosilane et d'un alcoxyde métallique avec une résine époxy durcissable.

14. Procédé de production d'un film multicouche comprenant les étapes consistant à :
(a) revêtir une surface d'un substrat polymère avec une composition de revêtement de tampon durcissable au rayonnement UV et thermiquement durcissable afin de former une couche tampon ;
(b) effectuer le durcissement au rayonnement UV de la couche tampon ;
(c) effectuer le durcissement thermique de la couche tampon durcie au rayonnement afin de former un film multicouche ayant une structure comprenant la couche tampon stratifiée avec le substrat polymère ;
(d) répéter les étapes (a) à (c) afin de fournir un autre film multicouche ayant la même structure que celle mentionnée à l'étape (c) ; et
(e) stratifier ensemble les films multicouche obtenus aux étapes (c) et (d) de manière à ce que les surfaces du substrat polymère des films soient en contact les unes avec les autres afin de former un film multicouche ayant une structure symétrique,
dans lequel les couches tampon comprennent un produit durci au rayonnement UV et et thermiquement durci d'un mélange d'hydrolysat composé d'au moins un organosilane et d'un alcoxyde métallique avec une résine époxy durcissable.

15. Procédé selon la revendication 13 ou 14, dans lequel le durcissement au rayonnement UV est effectué sous une dose d'énergie dans la plage de 20 mJ/cm² à 3000 mJ/cm² pendant une période d'une seconde à plusieurs heures, et le durcissement thermique est effectué à une température de 100 à 200 °C pendant une période d'une minute à plusieurs heures.

16. Dispositif électronique comprenant le film multicouche défini dans l'une quelconque des revendications 1 à 12.

17. Composition tampon comprenant une composition de type sol d'hydrolysat composée d'au moins un organosilane et d'un alcoxyde métallique et d'une résine époxy durcissable,
dans laquelle l'organosilane comprend au moins un composant sélectionné parmi un groupe constitué de composants représentés par les Formules chimiques 1 à 3 suivantes, l'alcoxyde métallique comprend au moins un composant sélectionné parmi un groupe constitué de composants représentés par la Formule chimique 4 suivante, et la résine époxy durcissable comprend au moins un composant sélectionné parmi un groupe constitué de résines époxy alicycliques représentées par les Formules chimiques 5 à 10 suivantes et des isocyanurates de triglycidyle représentés par la Formule chimique 11 qui fait suite:
[Formule chimique 1] (R¹)ₘ-Si-X₍₄₋ₘ₎
[Formule chimique 2] (R¹)ₘ-O-Si-X₍₄₋ₘ₎
[Formule chimique 3] (R¹)ₘ-N(R²)-Si-X₍₄₋ₘ₎
dans lesquelles les X peuvent être identiques ou différents, et chacun représente H, un halogène, un alcoxy en C1 à C12, un acyloxy, un alkylcarbonyle, un alcoxycarbonyle ou - N(R²)₂ ;
les R¹ peuvent être identiques ou différents, et chacun représente un alkyle en C1 à C12, un alkényle en C2 à C12, un alkynyle, un aryle en C6 à C20, un arylalkyle, un alkylaryle, un arylalkényle, un alkénylaryle, un arylalkynyle, un alkynylaryle, un halogène, une amide, un aldéhyde, une cétone, un alkylcarbonyle, un carboxy, un mercapto, un cyano, un hydroxyle, un alcoxy en C1 à C12, un alcoxycarbonyle en C1 à C12, un acide sulfonique, un acide phosphorique, un acryloxy, un méthacryloxy, un groupe époxy ou vinylique ;
R² représente H ou un alkyle en C1 à C12 ; et
m est un entier valant de 1 à 3.
[Formule chimique 4] M-(R³)_{z}
dans laquelle M est un élément métallique sélectionné parmi l'aluminium, le zirconium et le titane ;
les R³ peuvent être identiques ou différents et chacun représente l'halogène, l'alkyle en C1 à C12, l'alcoxy, l'acyloxy ou un groupe hydroxyle ; et
Z est un entier valant 3 ou 4. 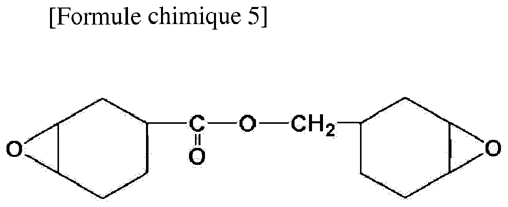 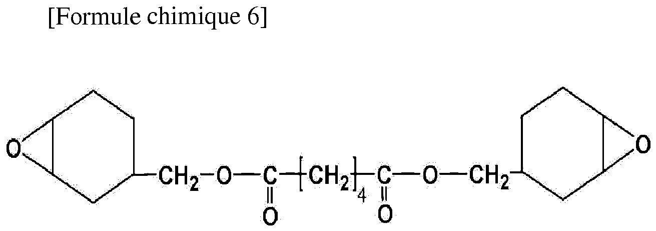 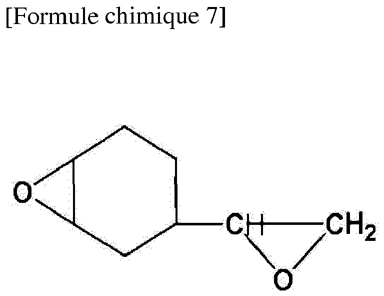 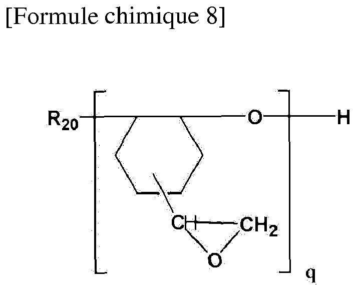
dans laquelle R₂₀ représente un résidu d'alkyle ou de triméthylolpropane et q vaut de 1 à 20. 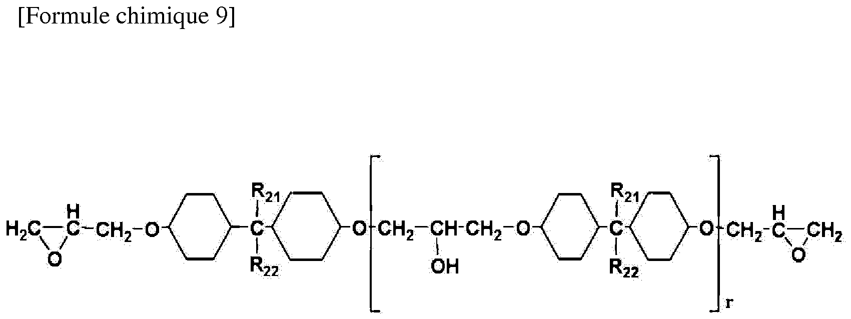 dans laquelle R₂₁ et R₂₂ peuvent être identiques ou différents, et chacun représente H ou CH₃, et r vaut 0 à 2. 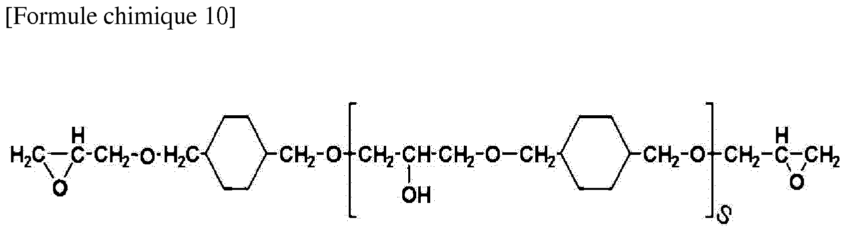 dans laquelle s vaut 0 à 2.
